# EUROPÄISCHE PATENTANMELDUNG

(11) **EP 1 008 475 A2**
(43) Veröffentlichungstag der Anmeldung: **14.06.2000**
(21) Anmeldenummer: 99123885.8
(22) Anmeldetag: 02.12.1999
(51) Int. Cl.: B60J 3/02

(54) **Sonnenblende für Fahrzeuge**

(30) Priorität: 12.12.1998 DE 19857454
(71) Anmelder: Johnson Controls Interiors GmbH, 42285 Wuppertal (DE)
(72) Erfinder: Viertel, Lothar, 66802 Altforweiler (DE); Welter, Patrick, 57730 La Chambre (FR)

(57) **Zusammenfassung**

Beschrieben wird eine Sonnenblende für Fahrzeuge mit einem flachen, länglichen Sonnenblendenkörper (1). Eine Lagereinrichtung (7) ermöglicht es, den Sonnenblendenkörper (1) aus einer Nichtgebrauchslage in eine erste Gebrauchslage zu klappen und in eine zweite Gebrauchslage zu schwenken. Die Lagereinrichtung (7) umfaßt einen aus einem Eckbereich des Sonnenblendenkörpers (1) heraustretenden Achszapfen (6), ein den Achszapfen (6) aufnehmendes Lagergehäuse (22) mit einem winklig zum Achszapfen (6) ausgerichteten Schwenkzapfen (32), ein den Schwenkzapfen (32) aufnehmendes, an der Fahrzeugkarosserie befestigbares Schwenklagergehäuse (41) und Mittel zur axialen Festlegung des Lagergehäuses (22) am Achszapfen (6) und des Schwenklagergehäuses (41) am Schwenkzapfen (32).

## Beschreibung

Die Erfindung bezieht sich auf eine Sonnenblende für Fahrzeuge mit einem flachen, länglichen Sonnenblendenkörper.

Bei heutigen Sonnenblenden sind Rastfedern im Einsatz, die in Abstimmung mit der Blendenachse ein bestimmtes Klappmoment und eine Rastfunktion des Blendenkörpers bewirken. Bei den Blendensystemen befindet sich die Rastfeder in der Regel innerhalb des Blendenkörpers und ist am Lager eines Stabilisierungsrahmens befestigt. Aufgrund dieses Prinzipaufbaus ergibt sich durch die Summierung des Achsdurchmessers, der Lagerwanddicken sowie der Mindestmaterialdicken bei den Blendenkörpern ein Querschnittsmaß, das von der Abnehmerschaft kritisiert wird, weil dünnere Blendenkörper gewünscht werden.

Der Erfindung liegt die Aufgabe zugrunde, der Abnehmerschaft eine verbesserte Sonnenblende, insbesondere eine Sonnenblende mit einem relativ dünnen Sonnenblendenkörper zur Verfügung zu stellen, die sich zudem durch verbesserte Gebrauchseigenschaften auszeichnen soll.

Diese Aufgabe wird erfindungsgemäß mit den Merkmalen des Anspruchs 1 gelöst. Die Unteransprüche geben zweckmäßige Ausgestaltungen und vorteilhafte Weiterbildungen der Erfindung an.

Erfindungsgemäß ist nun die Lagereinrichtung sowohl für die Klappbewegung als auch für die Schwenkbewegung des Sonnenblendenkörpers außerhalb des Sonnenblendenkörpers angeordnet mit dem besonderen Vorteil, daß nunmehr der Sonnenblendenkörper wesentlich dünner als bisher üblich ausgebildet werden kann. Ein weiterer Vorteil der Erfindung besteht darin, daß die üblicherweise zum Einsatz kommende Rastfeder nebst ihrer erforderlichen Lagerstelle ebenfalls außerhalb des Sonnenblendenkörpers verlegt werden konnte, so daß eine teuere zusätzliche Oberflächenveredelung derselben nicht mehr erforderlich ist. Eine solche Veredelung mußte insbesondere bei Sonnenblenden aus Kunststoff, bei denen das Schaummaterial wie EPP, unter Einfluß von Naßdampf aufgeschäumt wird, vorgenommen werden, um Korrosionsbelastungen entgegenzuwirken. Auch ist der Aufwand der erforderlichen Fettung (Achse/Rastfeder) erheblich vereinfacht, durch einfachste Handhabung bzw. bessere Plazierung und damit auch geringerer Dosierung. Es entstehen auch weniger Ausschußteile, da kaum eine Möglichkeit der Körperverschmutzung durch Fettspuren (heutige Fettung erfolgt mittels einer Injektionsnadel, dadurch Fettspuren am Sonnenblendenkörper, die zusätzlich entfernt werden müssen). Ferner ist die Komplettierung, Montage der kompletten Sonnenblende aufgrund des neuen Konzepts automatisierbar. Aufgrund der guten Identifizierungsmöglichkeit ergibt sich eine bessere sichtbare Erkennungs- und Kennzeichnungsmöglichkeit für linke bzw. rechte Sonnenblenden. Damit wird die Federquelle (Verwechselung) linker und rechter Sonnenblenden weiter reduziert. Es kann ein von vielen Abnehmern gewünschter quadratischer Spiegel eingesetzt werden, da mehr Freiraum für einen größeren Spiegel im Sonnenblendenkörper zur Verfügung steht. Diese Vorteile wirken sich sehr positiv und günstig auf den Herstellungsprozeß und die Qualität aus, was sich letztendlich in niedrigeren Herstellungskosten bemerkbar macht.

Ein Ausführungsbeispiel der Erfindung wird nachfolgend anhand der Zeichnungen näher erläutert, und es zeigen:
- Fig. 1: die Sonnenblende in einer Gesamtansicht,
- Fig. 2: einen Eckbereich der Sonnenblende,
- Fig. 3: einen an einer Verstärkungseinlage der Sonnenblende angeordneten Achszapfen,
- Fig. 4: den Achszapfen nach Fig. 3 mit und ohne Stabilisierung,
- Fig 5: eine Explosivdarstellung der Lagereinrichtung ohne Achszapfen,
- Fig. 6: den Zusammenbau der Lagereinrichtung nach Fig. 5 mit Achszapfen,
- Fig. 7: einen Schnitt A - A nach Fig. 1 und
- Fig. 8: einen Schnitt B - B nach Fig. 1.

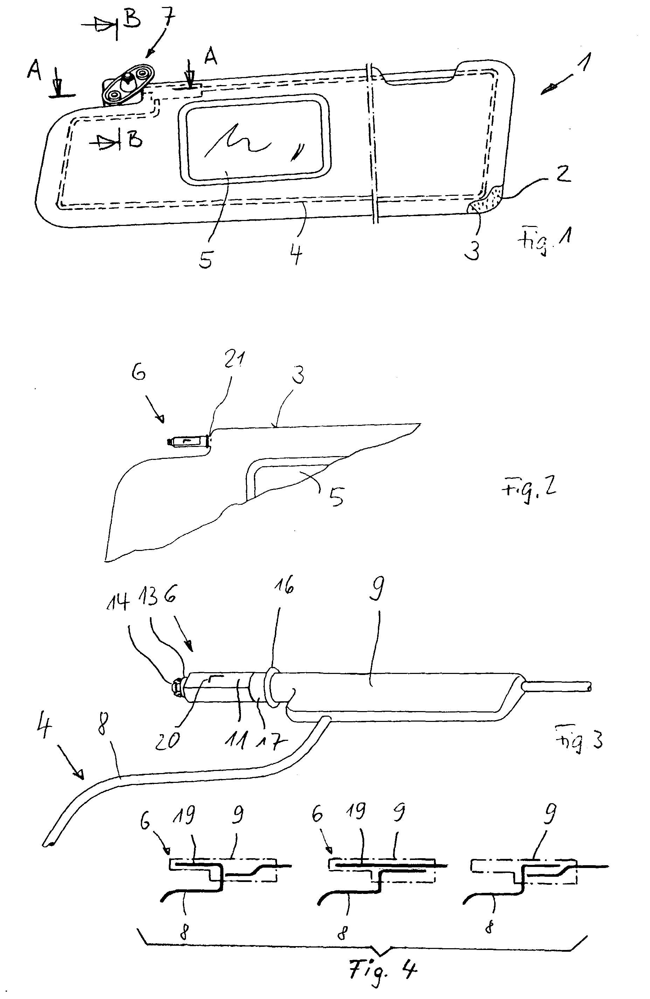

Fig. 1 zeigt eine komplette Sonnenblende, deren Sonnenblendenkörper 1 beispielsweise aus Schaumkunststoff 2 wie EPP besteht und mit Dekormaterial 3 umhüllt ist. Der Sonnenblendenkörper 1 weist einen in der Formgebung einfachst gebogene Stabilisierungsrahmen 4 auf und ist mit einem Kosmetikspiegel 5 bestückt. An einem Eckbereich des Sonnenblendenkörpers 1 ragt ein Achszapfen 6 heraus, der mit einer noch zu beschreibenden Lagereinrichtung 7 verbunden ist.

Der Stabilisierungsrahmen 4 besteht aus einem gebogenen Drahtabschnitt 8 mit einem örtlich angespritzten Kunststoffkörper 9 (auch klipsbare Lösungen denkbar) mit der Ausbildung eines Achszapfens 6. Der Achszapfen 6 ist entsprechend der eingesetzten heutigen Serienrastfeder 10 dimensioniert, so daß die erforderlichen Klapp-/Rastmomente erfüllt werden. Der Achszapfen 6 weist eine einseitige Rastfläche 11 auf mit einer vorbestimmten Länge entsprechend der Rastfeder 10 sowie einem vorbestimmten kreisförmigen Querschnitt. Stemseitig des Achszapfens 6 ist eine kreisförmige Abstufung 13 vorgesehen. Daran schließt sich stirnseitig die Ausbildung eines Pilzkopfes 14 an, der aus Gründen guter Klipsmöglichkeit mit Schlitzen 49 versehen ist. Zur besseren bzw. leichteren Montage für die Feder 10 weist der Achszapfen 6 eine Abschrägung 15 auf. Eine ringförmige Verdickung 16 am Achszapfen 6 dient als Anschlag für das Lagergehäuse 22. Eine deutlich sichtbare Kennzeichnung zur Identifizierung linker bzw. rechter Teile kann durch eine entsprechend vertiefte Buchstabenkennzeichnung 20 an z. B. der Rastfläche 11 vorgesehen sein.

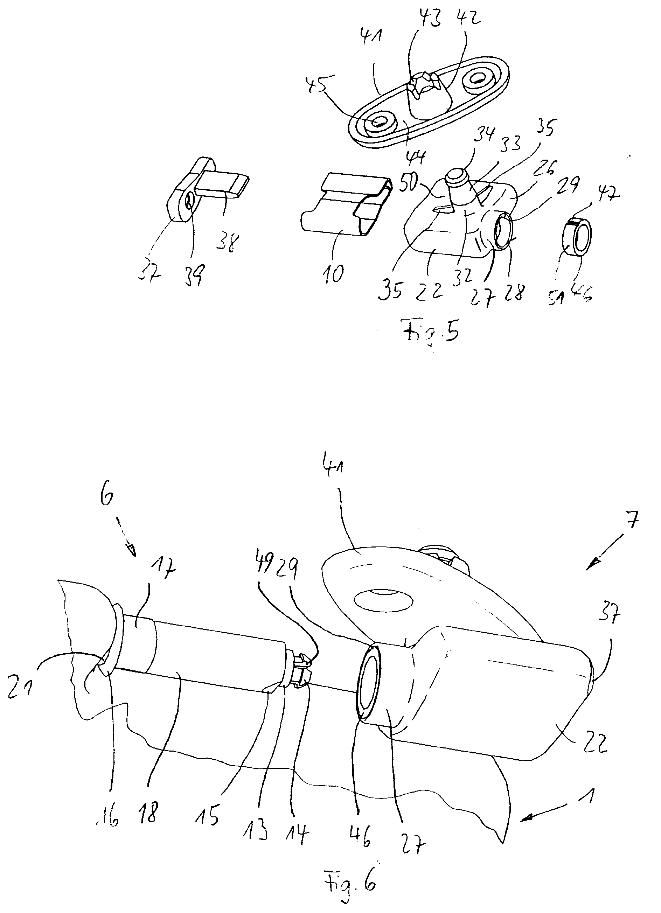

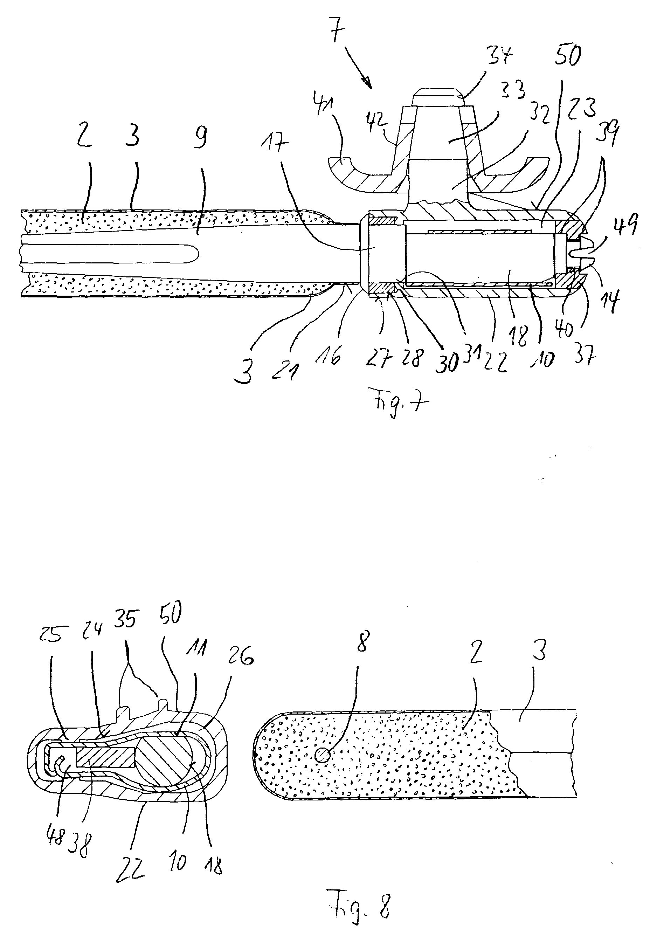

Sollte es aus welchen Gründen auch immer erforderlich sein, den Achszapfen 6 aus Festigkeitsgründen stabilisieren zu müssen, so sind entsprechend Fig. 4 zwei Beispiele dargestellt wie ein Drahtende 19 in den Achszapfen 6 eingelagert werden kann. Es versteht sich, daß anstelle des hier beschriebenen Stabilisierungsrahmens 4 auch eine Rahmenkonzeption eingesetzt werden kann, die komplett aus einem Kunststoffspritzling hergestellt ist.

Fig. 2 stellt den Teilbereich des freien und aus dem Sonnenblendenkörper 1 austretenden Achszapfen 6 dar. Das Dekormaterial 3 umhüllt dabei einen kreisförmigen Bereich 21 bis an die ringförmige Verdickung 16 und stellt einen sauberen harmonischen Abschluß dar.

Die Lagereinrichtung entsprechend Fig. 5 setzt sich aus mehreren Einzelteilen zusammen. Dabei ist zunächst das Lagergehäuse 22 ein Kunststoffspritzling mit einem Öffnungsquerschnitt, der der Formgebung der Rastfeder 10, die im Hohlraum 23 sitzt, angepaßt ist. Der Hohlraum 23, der einseitig weit offen ist, bietet der Rastfeder 10 die Montageöffnung und den erforderlichen Funktionsfreiraum. An der Innenwandung 24 des Lagergehäuses 22 sind gegenüberliegend Erhöhungen 25 vorgesehen, die die Rastfeder 10 in ihrem unteren Bereich abstützen und führen. Die Wandung 26 bildet den Abschluß des Lagergehäuses 22 und auch des Hohlraums 23 und weist eine Lagerbuchse 27 auf. Am inneren kreisförmigen Querschnitt 28 der Lagerbuchse 27 befindet sich eine örtliche Erhöhung 29. Diese sind begrenzt in ihrer Tiefe durch eine ringförmige Abstufung 30 wobei des Öffnungsloch 31 paßgenau auf den Durchmesser 17 des Achszapfens 6 abgestimmt ist, zwecks Bildung einer ersten Lagerstelle. An der Oberseite 50 des Lagergehäuses 22 ist ein Schwenkzapfen 32 integriert angespritzt, der endseitig mit einem Konusteil 33 und daran anschließend mit einem Pilzkopf 34 ausgebildet ist. Stabilisiert wird der Schwenkzapfen 32 durch Verrippungen 35, die in die Oberseite 50 des Lagergehäuses 22 übergehen.

Das Verschlußteil 37 ist ein Kunststoffspritzling, der in Form und Abmessung dem Hohlraum 23 und der Außenform des Lagergehäuses 22 angepaßt ist. Ein Füllstück 38 des Verschlußteils 37 ist paßgenau und fluchtend zum Achszapfen 6. Das Verschlußteil 37 ist mit einem abgestuften Durchgangsloch 39 und mit einer ringartigen Abstufung 40 versehen. Ein Schwenklagergehäuse 41 ist ein Kunststoffspritzling mit konischem Dom 42, der endseitig mit Schlitzen versehen ist. Im Boden 44 des Schwenklagergehäuses 41 befinden sich zwei Befestigungsöffnungen 45.

Der in Fig. 5 dargestellte Ringkörper 46 mit an der äußeren Ringfläche 51 örtlich angebrachten Nut 47 ist paßgenau auf die ringförmige Stutzenöffnung 28 und den Achsdurchmesser 17 abgestimmt. Der Ringkörper 46 ist aus einem thermoplastischen Polyesterelastomer (TPE) hergestellt und soll die Funktion einer Reibungsbremse übernehmen, um einen harten Anschlag des Sonnenblendenkörpers 1 am Fahrzeughimmel zu vermeiden. Eine weitere Funktion des Ringkörpers 46 kann in der Dichtwirkung gegen Fettaustritt gesehen werden.

### Montage:

Die Rastfeder 10 wird zunächst in den Hohlraum 23 des Lagergehäuses 22 eingeschoben. Nun kann, falls erforderlich, der Rastfeder 10 ein Schmiermittel zugeführt werden. Danach wird in den Hohlraum 23 des Lagergehäuses 22 das Verschlußteil 37 eingepreßt. Dabei führt sich das Füllstück 38 in den Freibereich 48 der Federschenkel, so daß die Rastfeder 10 gegen ein Abkippen, Wackeln und dgl. gesichert ist. Danach kann die Montage des Schwenklagergehäuses 41 erfolgen und der Ringkörper 46 in die Lagerbuchse 27 des Lagergehäuses 22 eingedrückt werden. Die Nut 47 in Verbindung mit der Erhöhung 29 bewirkt eine verdrehsichere Positionierung. Die komplette Lagereinrichtung 7 wird hiernach auf den Achszapfen 6 aufgedrückt, und zwar soweit bis der Pilzkopf 14 im Durchgangsloch 39 bzw. der Abstufung 40 des Verschlußteils 37 verrastet. Es sind nun drehbare Lagerstellen gebildet, und zwar durch den Achsbereich 17 und der ringförmigen Abstufung 30 des Lagergehäuses 22 sowie der kreisförmigen Abstufung 13 und dem Öffnungsloch 39 des Verschlußteils 37. Der Sonnenblendenkörper 1 ist somit fixiert und kann geklappt und geschwenkt werden. Durch die Anordnung der Rastfeder 10 außerhalb des Sonnenblendenkörpers 1 ist eine Entsorgung im Sinne einer Recycelfähigkeit ein weiterer Vorteil der Erfindung wie auch die Möglichkeit einer schnelleren Nacharbeit, eines Austauschs und dgl.

## Patentansprüche

1. Sonnenblende für Fahrzeuge mit
- einem flachen, länglichen Sonnenblendenkörper (1),
- einer Lagereinrichtung (7), die es ermöglicht, den Sonnenblendenkörper (1) aus einer Nichtgebrauchslage oberhalb einer Fahrzeugwindschutzscheibe in eine erste Gebrauchslage vor der Windschutzscheibe zu klappen und es ferner ermöglicht, den Sonnenblendenkörper (1) in eine zweite Gebrauchslage vor eine Fahrzeugseitenscheibe zu schwenken, wobei
- die Lagereinrichtung (7) einen aus einem Eckbereich des Sonnenblendenkörpers (1) heraustretenden Achszapfen (6),
- ein den Achszapfen (6) aufnehmendes Lagergehäuse (22) mit einem winklig zum Achszapfen (6) ausgerichteten Schwenkzapfen (32),
- ein den Schwenkzapfen (32) aufnehmendes, an der Fahrzeugkarosserie befestigbares Schwenklagergehäuse (41) und
- Mittel zur axialen Festlegung des Lagergehäuses (22) am Achszapfen (6) und des Schwenklagergehäuses (41) am Schwenkzapfen (32) aufweist.

2. Sonnenblende nach Anspruch 1, dadurch gekennzeichnet, daß das Lagergehäuse (22) einendig eine den Achszapfen 6 umschließende Lagerbuchse (27) aufweist und anderendig mit einem eine Durchgangsbohrung (39) aufweisenden Verschlußteil (37) bestückt ist, wobei das Verschlußteil (37) am Lagergehäuse (22) und damit auch das Lagergehäuse (22) durch den Achszapfen (6) gehalten ist, der an seinem freien Ende mit einem die Durchgangsbohrung (39) durchsetzenden und das Verschlußteil (37) hintergreifenden Pilzkopf (14) versehen ist.

3. Sonnenblende nach Anspruch 1 oder 2, dadurch gekennzeichnet, daß der Schwenkzapfen (32) einen Konusteil (33) und einen sich daran anschließenden Pilzkopf (34) aufweist und daß das Schwenklagergehäuse (41) einen mit dem Konusteil (33) korrespondierenden Innenkonus aufweist, der in einem vom Pilzkopf (34) übergriffenen Dom (42) ausgebildet ist.

4. Sonnenblende nach wenigstens einem der vorangegangenen Ansprüche, dadurch gekennzeichnet, daß im Lagergehäuse (22) eine den Achszapfen (6) klemmende Feder (10) angeordnet ist.

5. Sonnenblende nach wenigstens einem der vorangegangenen Ansprüche, dadurch gekennzeichnet, daß das Verschlußteil (37) mit einem zwischen die Federarme greifenden Füllstück (38) versehen ist.

6. Sonnenblende nach wenigstens einem der vorangegangenen Ansprüche, dadurch gekennzeichnet, daß die Lagereinrichtungsteile als Kunststoff-Spritzgußteile augebildet sind.

7. Sonnenblende nach wenigstens einem der vorangegangenen Ansprüche, dadurch gekennzeichnet, daß der Achszapfen (6) Teil einer den Sonnenblendenkörper (1) aussteifenden Verstärkungsteinlage (4) ist.

8. Sonnenblende nach wenigstens einem der vorangegangenen Ansprüche, dadurch gekennzeichnet, daß die Verstärkungseinlage (4) aus einem gebogenen Drahtabschnitt (8) besteht, an den ein Kunststoffkörper (9), zu dem auch der Achszapfen (6) gehört, angeklipst oder unmittelbar angespritzt ist.

9. Sonnenblende nach wenigstens einem der vorangegangenen Ansprüche, dadurch gekennzeichnet, daß in den Achszapfen (6) ein Endabschnitt (19) eines Drahtes (8) eingelagert ist.

10. Sonnenblende nach wenigstens einem der vorangegangenen Ansprüche, dadurch gekennzeichnet, daß das Lagergehäuse (22) mit einer am Achszapfen (6) angreifenden Reibungsbremse bestückt ist.

11. Sonnenblende nach Anspruch 10, dadurch gekennzeichnet, daß die Reibungsbremse aus einem drehfest im Lagergehäuse (22) angeordneten Ringkörper (46) besteht.

12. Sonnenblende, insbesondere nach Anspruch 2 oder 11, dadurch gekennzeichnet, daß der die Reibungsbremse bildende Ringkörper (46) in einer Bohrungserweiterung (28) der Lagerbuchse (27) aufgenommen ist.

13. Sonnenblende nach wenigstens einem der vorangegangenen Ansprüche, dadurch gekennzeichnet, daß das Lagergehäuse (22) mit Verschlußteil (37) auf dem Achszapfen (6) ausgenommen ist, und zwar zwischen einer am Achszapfen (6) angeformten ringförmigen Verdickung (16) und dem am Achszapfen (6) angeformten Pilzkopf (14).

14. Sonnenblende nach wenigstens einem der vorangegangenen Ansprüche, dadurch gekennzeichnet, daß der Sonnenblendenkörper (1) als Kunststoff-Blasformteil, Kunststoff-Spritzgußteil oder Kunststoff-Schaumformteil ausgebildet ist.
